# EUROPÄISCHE PATENTSCHRIFT

(11) **EP 1 587 195 B1**
(45) Veröffentlichungstag und Bekanntmachung des Hinweises auf die Patenterteilung: **16.10.2013**
(21) Anmeldenummer: 05005437.8
(22) Anmeldetag: 12.03.2005
(51) Int. Cl.: H02G 3/06

(54) **Kabelkanalsystem**
Cable channel system
Système de canalisation pour câble

(30) Priorität: 16.04.2004 DE 202004005987 U
(43) Veröffentlichungstag der Anmeldung: 19.10.2005
(73) Patentinhaber: REHAU AG + Co, 95111 Rehau (DE)
(72) Erfinder: Schork, Rainer, 91330 Bammersdorf (DE); Schinzel, Hartmut, 95213 Münchberg (DE)

(56) Entgegenhaltungen:
- EP-A- 1 061 623
- EP-A- 1 306 951
- US-A1- 2006 201 696

## Beschreibung

Die Erfindung betrifft ein Kabelkanalsystem nach dem Oberbegriff des Anspruches 1. Diese werden für die Verlegung bzw. Installation von Elektroleitungen oder auch von Leitungen bzw. Kabel für Informations-/Kommunikationsnetze eingesetzt, wobei derartige Kabelkanalsysteme im wesentlich aus U-förmigen bzw. C-förmigen, einseitig offen ausgebildeten Profilen bestehen, wobei die offen ausgebildete Seite nach erfolgter Verlegung der Kabel bzw. Leitungen mittels einer zu dem Profil passenden Abdeckung verschlossen werden können.

Derartige Kabelkanalsysteme sind in den einschlägigen Branchen allgemein bekannt, d.h. derartige Kabelkanalsysteme werden seit Jahren in großen Mengen hergestellt und montiert. Diese Kabelkanalsysteme sind je nach Einsatzbedingungen als Kunststoff-Extrusionsteile, als Aluminium-Strangpressteile oder als gekantete Stahlblech-Profile lieferbar.

Dabei werden die Kabelkanalelemente in festen Längen von bspw. 2 m geliefert, so dass die eine zu verlegende größere Gesamtstrecke aus mehreren einzelnen Kabelkanalelementen zusammengesetzt werden muss, wobei der Bereich des Aneinanderfügens der Kabelkanalelemente eine Problemzone dahingehend bildet, dass bei der stirnseitigen Montage möglichst kein seitlicher Versatz zwischen den einzelnen Kabelkanalelementen eintreten darf.

Für die Realisierung solcher stirnseitiger Verbindungen sind eine Reihe technischer Lösungen bekannt.

So wird in der EP-B 0 753 917, der DE-U1 295 10 836 die Verwendung von Winkelstücken aus Metall zur Verstärkung von im Winkel verlegten Kabelkanalelementen beschrieben, wobei die Verstärkungen in vorgesehene Taschen in den auf Gehrung geschnittenen Enden der Kabelkanalelemente eingeschoben werden.

Weiterhin wird in der EP-B1 0 721 243 eine Verbindungsmöglichkeit von zwei auf Stoß miteinander zu verbindenden Kabelkanalelementen beschrieben, bei der die Kupplungselemente aus Kunststoff zwischen dem Deckelverschluss-Profil und dem Boden des Unterteils des Kabelkanalelementes verklemmt werden, wobei auf der Innenseite des Boden des Kabelkanalelementes, parallel zu den Seitenwänden des Kabelkanalelementes, zusätzlich Längsleisten angeordnet sind, die einen Fuß der Kupplungselemente fixieren.

Neben den in der DE-U1 299 10 683 angegebenen Nachteilen der bisher bekannten Verbindungselemente für diese Kabelkanalselemente besteht ein weiterer Nachteil darin, dass zur Fixierung der Kupplungselemente entsprechend eingeformte Prägungen am Unterteil des Kabelkanalelementes erforderlich sind.

Die Verwendung von metallischen Kupplungsstiften für das Verbinden von zwei Kabelkanalelementen aus bspw. Kunststoff hat den Nachteil, dass sich diese sehr leicht in den Kunststoff einarbeiten und sich so zu lockern beginnen, wobei dieser Prozess durch das Setzungsverhalten des Kunststoffs noch unterstützt wird.

Weiterhin ist bei dieser Verbindungsart von Nachteil, dass diese losen metallischen Kupplungselemente gesondert gelagert und transportiert werden müssen, so dass es zum Teil passiert, dass nicht genügend Kupplungselemente auf der Baustelle vorrätig sind bzw. verlustig gehen können.
Außerdem sind derartige metallische Kupplungselemente verhältnismäßig teuer in der Herstellung und können wegen der Einbauverhältnisse (Leichtgängigkeit der Kupplungsstifte beim Einschieben der Stifte in die Wand des Kabelkanalelementes aus Kunststoff) nicht bereits vormontiert werden. Ein weiterer Nachteil dieser metallischen Kupplungselemente besteht in ihrer Korrosionsanfälligkeit.

Eine weitere Möglichkeit des stirnseitigen Aneinanderfügens derartiger Kabelkanalelemente besteht darin, dass bereits bei Herstellung der Kabelkanalelemente ein entsprechendes Kupplungselement mit angeformt wird.
Eine solche Verbindungsmöglichkeit hat zwar einerseits den Vorteil, dass keine separaten Bauteile für das stirnseitige Aneinanderfügen erforderlich sind, weist jedoch andererseits wiederum den Nachteil auf, dass durch die angeformten Kupplungselemente die Kanalelemente länger werden, wodurch sich wiederum Nachteile beim Transport und/oder der Lagerhaltung der Kabelkanalelemente ergeben.

Der vorliegenden Erfindung liegt daher die Aufgabe zu Grunde, ein Kabelkanalsystem der eingangs ausgeführten Art zu schaffen, welches die Nachteile des Standes der Technik überwindet und mit dem es möglich ist, einzelne Kabelkanalelemente in einfacher Art und Weise schnell, sicher und kostengünstig in der stirnseitigen Verbindung zu montieren und dadurch die Montagefreundlichkeit eines derartigen Kabelkanalsystems zu verbessern.

Erfindungsgemäß wird diese Aufgabe durch die kennzeichnenden Merkmal des Anspruches 1 gelöst. Weitere vorteilhafte Ausführungen sind in den Unteransprüchen ausgeführt.

Das erfindungsgemäße Kabelkanalsystem zeichnet sich dadurch aus, dass an den Endbereichen eines Kabelkanalelementes an mindestens einer der beiden Seitenwände ein Kupplungselement geführt ist, welches mindestens zwei Federelemente aufweist.
Im Lieferzustand sind die Kupplungselemente an der Seitenwand des Kabelkanalelementes anliegend angeordnet, wobei diese nicht über die Endbereiche des Kabelkanalelementes hinausragen. Im Montagezustand sind die Kupplungselemente jeweils etwa bis zur Hälfte längs der Seitenwand in das Kabelkanalelement eingeführt. Dadurch wird zum einen das Kupplungselement durch den Druck des einen Federelementes im Kabelkanalelement gehalten und zum anderen durch das noch zur Seitenwand des Kabelkanalelementes aufgebogene und Druck ausübende zweite Federelement gegen längsseitiges Verschieben durch das anzusetzende zweite Kabelkanalelement gesichert.
Im zusammengesetzten Zustand der Kabelkanalelemente werden die Kupplungselemente durch den von den Federzungen aufgebrachten Druck arretiert.

Als einer der wesentlichen Vorteile dieser erfindungsgemäßen Lösung ist die einfache Vormontage der Kupplungselemente und damit die schnelle stirnseitige Verbindung der beiden Kabelkanalelemente zu nennen, die auf Grund der an den Seitenwänden der Kabelkanalelemente eingebrachten Führungsrippen für die einzusetzenden Kupplungselemente erreicht werden.
Dabei ist es von Vorteil, dass die Federelemente über die Fläche des Kupplungselementes hinausragend ausgebildet sind, da so der erforderliche Druck für die Arretierung bewirkbar ist. In einer weiteren Ausführungsform sind die Federelemente in einem spitzen Winkel von der Fläche des Kupplungselementes wegragend ausgebildet.

Weiterhin wird auf Grund eines gemeinsamen Kupplungselementes für die stirnseitig aneinander zu fügenden Kabelkanalelemente eine nahezu selbstständige Justage an den Endbereichen erreicht. Die besondere Ausbildung des Kupplungselementes mit den Führungselementen an seinen Längsseiten und den vorteilhafter Weise angeformten Anlaufschrägen ermöglichen ein leichtes Montieren des Kabelkanalelemente des Kabelkanalsystems.

Vorteilhafte Weiterbildungen und Ausgestaltungen der Erfindung sind aus dem nachfolgend an Hand der Figuren beschriebenen, die Erfindung nicht einschränkenden Ausführungsbeispielen ersichtlich.

Es zeigen
Fig. 1 - eine perspektivische Darstellung eines Kabelkanalelementes im Montagezustand
Fig. 2 - eine Draufsicht eines Kupplungselementes
Fig. 3 - eine Ansicht des Kupplungselementes von unten

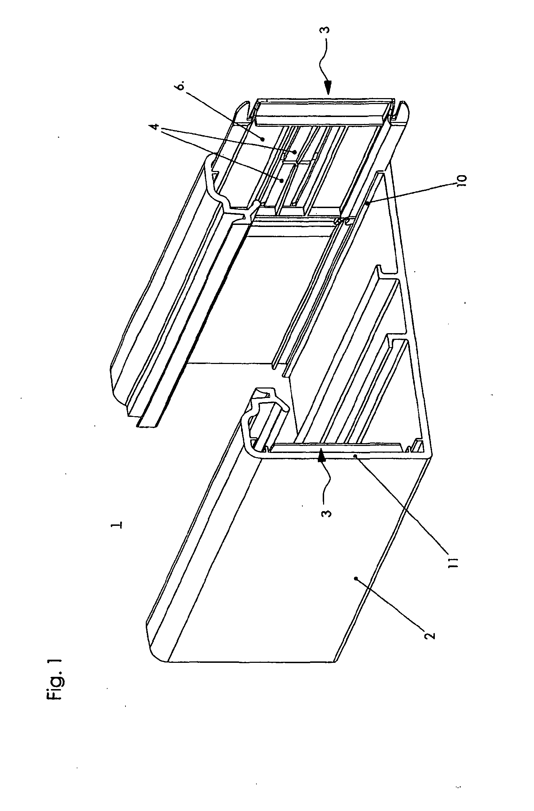

In der Figur 1 ist eine perspektivische Darstellung eines Kabelkanalelementes 1 dargestellt. Für den Montagezustand wird an der rechten Seitenwand 2 des Kabelkanalelementes 1 ein Kupplungselement 3 eingebracht. An den Seitenwänden 2 sind in diesem Ausführungsbeispiel Führungsrippen 10 einstückig angeformt, die ein längsseitiges Verschieben der Kupplungselemente 3 an der Seitenwand 2 des Kabelkanalelementes 1 ermöglichen. Die Federelemente 4 des Kupplungselementes 3, die in einem spitzen Winkel von der Fläche 6 des Kupplungselementes 3 wegragen, üben im eingeschobenen Zustand einen Druck auf die Seitenwand 2 des Kabelkanalelementes 1 aus, so dass das Kupplungselement 3 arretiert und nicht verschiebbar angeordnet ist.
Im Lieferzustand sind die Kupplungselemente 3 wie an der linken Seitenwand 2 des Kabelkanalelementes 1 dargestellt, so hineingeschoben, dass diese nicht über die Stirnseite 11 des Kabelkanalelementes 1 hinausragen. Um den Montagezustand des Kabelkanalelementes 1 zu erreichen, sind die Kupplungselemente 3 in ihre Arbeitsstellung zu bewegen, wobei dazu das Kupplungselement 3 aus dem Kabelkanalelement 1 herausgezogen wird, bis es etwa zur Hälfte längs der Seitenwand 2 des Kabelelementes 1 positioniert ist und das damit freiwerdende Federelement 4, welches in dieser Position von der Fläche 6 des Kupplungselementes 3 wegragt, an der Stirnseite 11 des Kabelkanalelementes 1 anliegt. Somit ist das Kupplungselement 3 durch das noch an der Seitenwand 2 des Kabelkanalelementes 1 positionierte eine Federelement 4 und das an der Stirnseite 11 des Kabelkanalelementes 1 positionierte zweite Federelement 4 fixiert. In diesem Montagezustand kann nun an das jeweils etwa zur Hälfte aus dem Kabelkanalelement 1 herausragende Kupplungselement 3 ein weiteres hier nicht dargestelltes Kabelkanalelement 1 angesetzt, positioniert und fixiert werden, wobei dies vorteilhafterweise durch eine Person in Einhandmontage möglich ist.
Durch die Fixierung des Kupplungselementes 3 wird das Federelement 4 an der Stirnseite 11 des Kabelkanalelementes 1 bei der Montage eines weiteren Kabelkanalelementes 1 nicht in das ursprüngliche Kabelkanalelement 1 zurückgeschoben. Diese einfache Montage der Kabelkanalelemente 1 kann sowohl mit einem Kupplungselement 3 als auch mit zwei einander gegenüberliegend angeordneten Kupplungselementen 3 realisiert werden. Ein weiterer Vorteil dieser erfindungsgemäßen Kabelkanalsysteme besteht darin, dass das Kupplungselement 3 in diesem Ausführungsbeispiel aus einem metallischen Werkstoff ausgeführt ist und somit zu einem sogenannten Potenzialausgleich zwischen zwei zu verbindenden Kabelkanalelementen 1 zusätzlich nutzbar ist.

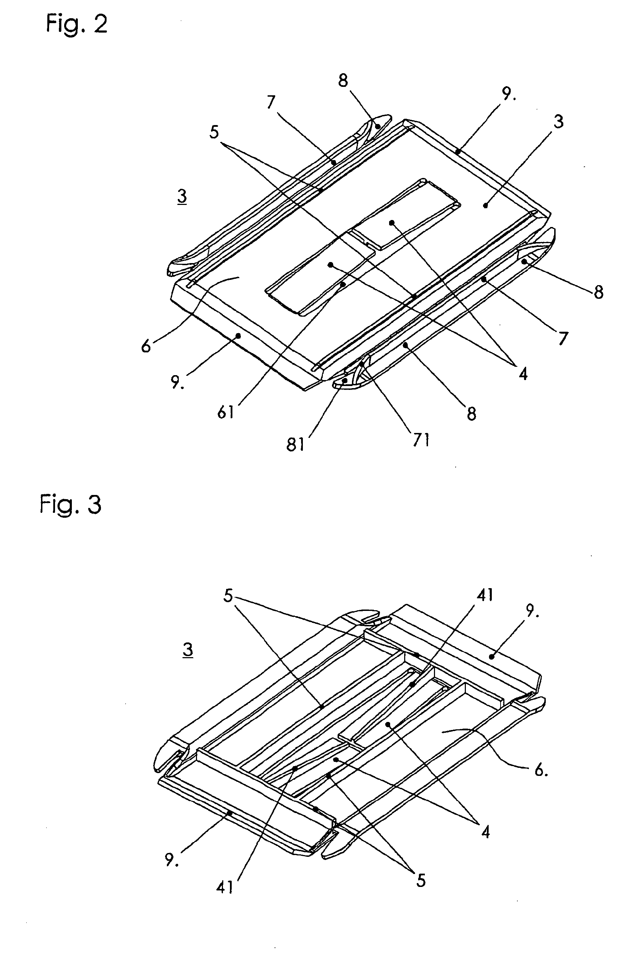

In Figur 2 ist eine Draufsicht eines Kupplungselementes 3 dargestellt. Dieses Kupplungselement 3 ist in diesem Ausführungsbeispiel aus einem Kunststoff hergestellt. Das Kupplungselement 3 weist im Zentrum der Fläche 6 zwei Federelemente 4 auf. Diese Federelemente 4 sind in einer rechteckigen Aussparung 61 der Fläche 6 des Kupplungselementes 3 einander gegenüberliegend angeordnet. Die freien Enden der Federelemente 4 sind einander beanstandet angeordnet, wobei die diesen gegenüberliegenden festen Enden der Federelemente 4 einstückig mit der Fläche 6 des Kupplungselementes 3 verbunden sind. Die Federelemente 4 weisen in diesem Ausführungsbeispiel einen rechteckigen Querschnitt auf, wobei hier auch weitere Querschnittsformen im Rahmen der Erfindung liegen.
Die Federelemente 4 sind von der Fläche 6 des Kupplungselementes 3 wegragend ausgebildet, wobei in diesem Ausführungsbeispiel die Federelemente 4 in einem spitzen Winkel von ca. 20° von der Fläche 6 des Kupplungselementes 3 wegragen. An den Längsseiten des Kupplungselementes 3 sind die Führungselemente 7, 8 angeordnet, die in diesem Ausführungsbeispiel an beiden Längsseiten des Kupplungselementes 3 angeordnet sind. Die Führungselemente 7, 8 weisen an ihren freien Enden Anlaufschrägen 71, 81 auf, die ein leichtes und einfaches Einführen der Kupplungselemente 3 in die Kabelkanalelemente 1 gewährleisten sollen. Die Anlaufschräge 71 des Führungselementes 7 ist in etwa orthogonal zur Fläche 6 des Kupplungselementes 3 ausgebildet, während die Anlaufschräge 81 des Führungselementes 8 etwa in einen spitzen Winkel zum Versteifungselement 5 des Kupplungselementes 3 ausbildet ist. Die Anlaufschrägen 71, 81 der Führungselemente 7, 8 sind in etwa gekrümmt, spitzförmig verlaufend ausgebildet, so dass das Kupplungselement 3 sowohl an der Seitenwand 2 als auch den Führungsrippen 10 des Kabelkanalelementes 1 leicht verschiebbar ist. Ein weiterer Vorteil der Anlaufschrägen 71, 81 der Führungselemente 7, 8 wird darin gesehen, dass beim Ansetzen der Kupplungselemente 3 ein genauer Ansatz an dem Kabelkanalelement 1 möglich ist.
In diesem Ausführungsbeispiel sind an den schmalen Seiten des Kupplungselementes 3 Stirnseiten 9 in einem spitzen Winkel angeordnet. Damit wird ebenfalls ein leichteres Einführen des Kupplungselementes 3 in das Kabelkanalelement 1 ermöglicht und auch die Montage eines zweiten Kabelkanalelementes 1 an einem bereits montierten Kabelkanalelement 1 erleichtert. Das Kupplungselement 3 in diesem Ausführungsbeispiel weist zwischen den Führungselementen 7 und den Federelementen 4 etwa parallel verlaufende Versteifungselemente 5 auf, die eine mechanische Verstärkung des Kupplungselementes 3 und eine bessere Verschiebbarkeit gewährleisten.

In der Figur 3 ist eine Ansicht des Kupplungselementes 3 von unten dargestellt. In dieser Darstellung ist erkennbar, dass die Federelemente 4 in etwa mittig Versteifungselemente 41 aufweisen, die den erforderlichen Druck der Federelemente 4 auf die Seitenwand 2 Kabelkanalelementes 1 gewährleisten, wobei durch die Geometrie der Federelemente 4 sowie der Versteifungselemente 41 der bewirkbare Druck der Federelemente 4 der entsprechenden Raumform des Kabelkanalelementes 1 beliebig anpassbar ist. Um die Stabilität des Kupplungselementes 3 weiter zu optimieren, sind Verstärkungselemente 5 auf der der Fläche 6 des Kupplungselementes 3 gegenüberliegenden Fläche angeordnet.
Diese Verstärkungselemente 5 sind sowohl parallel zu den Federelementen als auch orthogonal zu den Federelementen 4 ausgebildet und gewährleisten die für die Montage eines zweiten Kabelkanalelementes 1 erforderliche Stabilität bei gleichzeitiger Elastizität. In diesem Ausführungsbeispiel ist die Stirnseite 9 des Kupplungselementes 3 in entgegengesetzter Richtung zu den von der Fläche 6 des Kupplungselementes 3 wegragenden Federelementen 4 angeordnet, wodurch einerseits eine bessere Verschiebbarkeit des Kupplungselementes 3 im Kabelkanalelement 1 in Form einer Griffschräge realisiert ist und andererseits eine bessere Montageeinführung für ein zweites zu montierendes Kabelkanalelement 1 erreichbar ist.

## Patentansprüche

1. Kabelkanalsystem bestehend aus mindestens zwei Kabelkanalelementen, welche mittels separater Verbindungselemente in ihrer Längsrichtung aneinander fügbar sind, wobei die Kabelkanalelemente aus einem annähernd U-förmigen Kanalunterteil sowie einer vorzugsweise aufrastbaren Abdeckung bestehen und das Verbindungselement lösbar und / oder verschiebbar in die freien Endbereiche der Kabelkanalelemente einsetzbar ist, wobei an den Endbereichen eines Kabelkanalelementes (1) an mindestens einer der beiden Seitenwände (2) ein Kupplungselement (3) geführt ist, welches wenigstens zwei Federelemente (4) aufweist.
**dadurch gekennzeichnet,**
**dass** die Federelemente (4) in einer rechteckigen Aussparung (61) in einer Fläche (6) des Kupplungselements (3) einander gegenüber liegend angeordnet sind, wobei die freien Enden der Federelemente (4) des Kupplungselementes (3) voneinander beabstandet angeordnet sind.

2. Kabelkanalsystem nach Anspruch 1, **dadurch gekennzeichnet, dass** das Kupplungselement (3) im Lieferzustand so an der Seitenwand (2) des Kabelkanalelementes (1) anliegend angeordnet ist, dass diese nicht über den Endbereich des Kabelkanalelementes (1) herausragt.

3. Kabelkanalsystem nach Anspruch 1 und 2, **dadurch gekennzeichnet, dass** das Kupplungselement (3) im Montagezustand jeweils bis etwa zur Hälfte längs der Seitenwand (2) in die Endbereiche des Kabelkanalelementes (1) eingeführt und durch den von dem Federelement (4) aufgebrachten Druck arretierbar ist.

4. Kabelkanalsystem nach Anspruch 1 bis 3, **dadurch gekennzeichnet, dass** die Federelemente (4) des Kupplungselementes (3) auf der zur Seitenwand (2) des Kabelkanalelementes (1) weisenden Seite von der Fläche (6) wegweisend ausgebildet sind.

5. Kabelkanalsystem nach Anspruch 1 bis 4, **dadurch gekennzeichnet, dass** die Federelemente (4) des Kupplungselementes (3) in etwa einem spitzen Winkel von der Fläche (6) des Kupplungselementes (3) wegragend angeordnet sind.

6. Kabelkanalsystem nach Anspruch 1 bis 5, **dadurch gekennzeichnet, dass** an dem Federelement (4) des Kupplungselementes (3) wenigstens ein Versteifungselement (41) angeordnet ist.

7. Kabelkanalsystem nach Anspruch 1 bis 6, **dadurch gekennzeichnet, dass** auf der der Fläche (6) des Kupplungselementes (3) gegenüberliegenden Fläche Versteifungselemente (5) angeordnet sind.

8. Kabelkanalsystem nach Anspruch 1 bis 7, **dadurch gekennzeichnet, dass** das Kupplungselement (3) an seiner Längsseite etwa parallel zu den Federelementen (4) wenigstens ein Führungselement (7, 8) aufweist.

9. Kabelkanalsystem nach Anspruch 8, **dadurch gekennzeichnet, dass** die freien Enden der Führungselemente (7, 8) als Anlaufschrägen (71, 81) ausgebildet sind.

10. Kabelkanalsystem nach Anspruch 9, **dadurch gekennzeichnet, dass** jeweils eine Anlaufschräge (71) etwa orthogonal zur Fläche (6) des Kupplungselementes (3) ausgebildet ist.

11. Kabelkanalsystem nach Anspruch 9 bis 10, **dadurch gekennzeichnet, dass** jeweils eine Anlaufschräge (81) etwa in einem spitzen Winkel zum Versteifungselement (5) des Kupplungselementes (3) ausgebildet ist.

12. Kabelkanalsystem nach Anspruch 9 bis 11, **dadurch gekennzeichnet, dass** die Anlaufschräge (71, 81) der Führungselemente (7, 8) in etwa gekrümmt spitzförmig verlaufend ausgebildet ist.

13. Kabelkanalsystem nach einem der vorhergehenden Ansprüche, **dadurch gekennzeichnet, dass** die Stirnseite (9) in etwa einem spitzen Winkel an den Kupplungselement (3) angeordnet ist.

14. Kabelkanalsystem nach Anspruch 13, **dadurch gekennzeichnet, dass** die Stirnseite (9) in entgegengesetzte Richtung zu den Federelementen (4) vom Kupplungselement (3) wegragend angeordnet sind.

## Claims

1. Cable duct system consisting of at least two cable duct elements which can be joined together in their longitudinal direction by means of separate connection elements, the cable duct elements consisting of an approximately U-shaped duct lower part and a cover that can preferably be latched on, and the connection element being releasably and/or displaceably insertable into the free end regions of the cable duct elements, a coupling element (3) being guided on the end regions of a cable duct element (1) on at least one of the two side walls (2), said coupling element having at least two spring elements (4), **characterized in that** the spring elements (4) are located lying opposite one another in a rectangular cutout (61) in a surface (6) of the coupling element (3), the free ends of the spring elements (4) of the coupling element (3) being located at a distance from one another.

2. Cable duct system according to Claim 1, **characterized in that** the coupling element (3), in the shipped state, is located bearing against the side wall (2) of the cable duct element (1) such that said side wall (2) does not protrude beyond the end region of the cable duct element (1).

3. Cable duct system according to Claims 1 and 2, **characterized in that** the coupling element (3), in the assembled state, is inserted in each case up to about half of its length along the side wall (2) into the end regions of the cable duct element (1) and is arrestable on account of the pressure generated by the spring element (4).

4. Cable duct system according to Claims 1 to 3, **characterized in that** the spring elements (4) of the coupling element (3) are formed, on the side which points towards the side wall (2) of the cable duct element (1), so as to point away from the surface (6).

5. Cable duct system according to Claims 1 to 4, **characterized in that** the spring elements (4) of the coupling element (3) are located so as to protrude away at an approximately acute angle from the surface (6) of the coupling element (3).

6. Cable duct system according to Claims 1 to 5, **characterized in that** at least one stiffening element (41) is located on the spring element (4) of the coupling element (3).

7. Cable duct system according to Claims 1 to 6, **characterized in that** stiffening elements (5) are located on the surface which lies opposite the surface (6) of the coupling element (3).

8. Cable duct system according to Claims 1 to 7, **characterized in that** the coupling element (3), on its longitudinal side, approximately parallel to the spring elements (4), has at least one guide element (7, 8).

9. Cable duct system according to Claim 8, **characterized in that** the free ends of the guide elements (7, 8) are formed as oblique ramps (71, 81).

10. Cable duct system according to Claim 9, **characterized in that** in each case one oblique ramp (71) is formed approximately orthogonally in relation to the surface (6) of the coupling element (3).

11. Cable duct system according to Claims 9 to 10, **characterized in that** in each case one oblique ramp (81) is formed approximately at an acute angle in relation to the stiffening element (5) of the coupling element (3).

12. Cable duct system according to Claims 9 to 11, **characterized in that** the oblique ramp (71, 81) of the guide elements (7, 8) is formed extending in an approximately curvedly pointed manner.

13. Cable duct system according to one of the preceding claims, **characterized in that** the end side (9) is arranged on the coupling element (3) at an approximately acute angle.

14. Cable duct system according to Claim 13, **characterized in that** the end side (9) is arranged protruding away from the coupling element (3) in the opposite direction to the spring elements (4).

## Revendications

1. Système de chemin de câble, constitué d'au moins deux éléments de chemin de câble, qui peuvent être assemblés l'un à l'autre dans leur direction longitudinale au moyen d'éléments de liaison séparés, les éléments de chemin de câble se composant d'une partie inférieure de chemin approximativement en forme de U ainsi que d'un recouvrement pouvant être de préférence encliqueté et l'élément de liaison pouvant être inséré de manière détachable et/ou coulissante dans les régions d'extrémité libre des éléments de chemin de câble, un élément d'accouplement (3) étant guidé au niveau des régions d'extrémité d'un élément de chemin de câble (1) au niveau d'au moins l'une des deux parois latérales (2), lequel élément d'accouplement présente au moins deux éléments de ressort (4), **caractérisé en ce que** les éléments de ressort (4) sont disposés en regard l'un de l'autre dans un évidement rectangulaire (61) dans une surface (6) de l'élément d'accouplement (3), les extrémités libres des éléments de ressort (4) de l'élément d'accouplement (3) étant disposées à distance les unes des autres.

2. Système de chemin de câble selon la revendication 1, **caractérisé en ce que** l'élément d'accouplement (3), dans l'état fourni, est disposé de manière à s'appliquer contre la paroi latérale (2) de l'élément de chemin de câble (1) de telle sorte que celle-ci ne dépasse pas de la région d'extrémité de l'élément de chemin de câble (1).

3. Système de chemin de câble selon les revendications 1 et 2, **caractérisé en ce que** l'élément d'accouplement (3), dans l'état de montage, est introduit à chaque fois jusqu'à approximativement la moitié le long de la paroi latérale (2) dans les régions d'extrémité de l'élément de chemin de câble (1) et peut être bloqué par la pression appliquée par l'élément de ressort (4).

4. Système de chemin de câble selon les revendications 1 à 3, **caractérisé en ce que** les éléments de ressort (4) de l'élément d'accouplement (3) sont réalisés sur le côté tourné vers la paroi latérale (2) de l'élément de chemin de câble (1) en étant tournés à l'écart de la surface (6).

5. Système de chemin de câble selon les revendications 1 à 4, **caractérisé en ce que** les éléments de ressort (4) de l'élément d'accouplement (3) sont disposés approximativement suivant un angle aigu en faisant saillie à l'écart de la surface (6) de l'élément d'accouplement (3).

6. Système de chemin de câble selon les revendications 1 à 5, **caractérisé en ce qu'**au moins un élément de renforcement (41) est disposé sur l'élément de ressort (4) de l'élément d'accouplement (3).

7. Système de chemin de câble selon les revendications 1 à 6, **caractérisé en ce que** des éléments de renforcement (5) sont disposés sur la surface opposée à la surface (6) de l'élément d'accouplement (3).

8. Système de chemin de câble selon les revendications 1 à 7, **caractérisé en ce que** l'élément d'accouplement (3) présente sur son côté longitudinal au moins un élément de guidage (7, 8) approximativement parallèlement aux éléments de ressorts (4).

9. Système de chemin de câble selon la revendication 8, **caractérisé en ce que** les extrémités libres des éléments de guidage (7, 8) sont réalisées sous forme de biseaux d'introduction (71, 81).

10. Système de chemin de câble selon la revendication 9, **caractérisé en ce qu'**un biseau d'introduction (71) respectif est disposé approximativement perpendiculairement à la surface (6) de l'élément d'accouplement (3).

11. Système de chemin de câble selon les revendications 9 et 10, **caractérisé en ce qu'**un biseau d'introduction (81) respectif est réalisé approximativement suivant un angle aigu par rapport à l'élément de renforcement (5) de l'élément d'accouplement (3).

12. Système de chemin de câble selon les revendications 9 à 11, **caractérisé en ce que** les biseaux d'introduction (71, 81) des éléments de guidage (7, 8) sont réalisés de manière à s'étendre en forme de pointe sous forme approximativement courbe.

13. Système de chemin de câble selon l'une quelconque des revendications précédentes, **caractérisé en ce que** le côté frontal (9) est disposé approximativement suivant un angle aigu au niveau de l'élément d'accouplement (3).

14. Système de chemin de câble selon la revendication 13, **caractérisé en ce que** le côté frontal (9) est disposé dans la direction opposée aux éléments de ressort (4) en faisant saillie à l'écart de l'élément d'accouplement (3).
